# EUROPEAN PATENT SPECIFICATION

(11) **EP 2 661 787 B1**
(45) Date of publication and mention of the grant of the patent: **10.11.2021**
(21) Application number: 11811467.7
(22) Date of filing: 22.12.2011
(51) Int. Cl.: H01Q 1/24, H04B 1/00

(54) **ANTENNA ARRAY FOR SUPPORTING MULTIPLE BEAM ARCHITECTURES**
GRUPPENANTENNE ZUR UNTERSTÜTZUNG VON MEHRSTRAHLARCHITEKTUREN
RÉSEAU D'ANTENNES POUR SUPPORTER DE MULTIPLES ARCHITECTURES DE FAISCEAUX

(30) Priority: 05.01.2011 US 984932
(43) Date of publication of application: 13.11.2013
(73) Proprietor: Alcatel Lucent, 91620 Nozay (FR)
(72) Inventor: SAMARDZIJA, Dragan M., Highlands NJ 07732 (US); TRAN, Cuong, Howell NJ 07731 (US); HUANG, Howard C., New York NY 10003 (US); WALKER, Susan J., Freehold NJ 07728 (US); VALENZUELA, Reinaldo A., Holmdel NJ 07733 (US)
(74) Representative: Novagraaf Technologies
(86) International application number: PCT/US2011/066760
(87) International publication number: WO 2012/094166

(56) References cited:
- EP-A1- 1 320 146
- WO-A1-97/44914
- US-A1- 2003 032 424
- BREYER S ET AL: "UMTS NODE B ARCHITECTURE IN A MULTI-STANDARD ENVIRONMENT", ELECTRICAL COMMUNICATION, ALCATEL. BRUSSELS, BE, 1 January 2001 (2001-01-01), pages 50-54, XP001048842, ISSN: 0013-4252
- None

## Description

### BACKGROUND

A number of wireless technologies are expected to be implemented on a same cell site. For example, second generation (2G), third generation (3G), and fourth generation (4G) wireless technologies are to be simultaneously operational, with future incremental migration from 2G to 3G and then 4G. Those aspects are particularly important as a part of converged radio access networks. Re-use of the same cell towers, radio-frequency cabling, and antenna arrays is highly desirable providing cost-effective multi-technology solutions. Such re-use scenarios are described in EP1 320146 A1 or US 2003/032424 A1, for example.

One of the key issues is that different technologies require different beam architectures. For example, for each cell (i.e., sector) in the downlink, Global System for Mobile Communications (GSM) supports single-antenna transmission, High Speed Packet Access (HSPA) supports two-antenna transmission, and Long Term Evolution (LTE) supports up to four-antenna transmission. If a service provider decides to deploy LTE with 3 cells per site, and 4 antennas per cell, the service provider may have to manually implement additional antenna elements on the existing antenna configuration.

### SUMMARY

The present invention relates to a transceiver comprising an antenna array for supporting multiple beam architectures in accordance with the independent claim(s).

For example, the antenna array of the transceiver includes a plurality of antenna elements, where the plurality of antenna elements is configured to support at least two beam architectures in a cell site. Each beam architecture is associated with a different configuration of sectors and beamforming signals. According to one embodiment, each beam architecture is associated with a different wireless standard. According to another embodiment, each beam architecture is associated with a different carrier within one wireless standard. The antenna elements may be arranged as a circular array.

The transceiver includes a plurality of beamformer units, where each beamformer unit is associated with a different beam architecture and each beamformer unit is configured to generate a number of beamforming signals. Each beamforming signal includes a plurality of radio-frequency (RF) signals corresponding to a sub-set of antenna elements of the plurality of antenna elements. Each beamforming signal from each beamformer unit may be associated with a different sector in the cell site, and a number of beamforming signals may correspond to a number of sectors for a respective beam architecture. At least two beamforming signals generated from one beamformer unit use at least two of the same antenna elements in the sub-set.

Also, the transceiver includes a plurality of baseband units, where each baseband unit is associated with a different beam architecture and configured to generate baseband signals. Each baseband signal corresponds to a different sector.

Each beamformer unit is configured to generate a beamforming signal for a particular sector based on beamforming coefficients and a baseband signal received from a respective baseband unit, and each beamforming coefficient corresponds to a different antenna element in the sub-set. Each beamformer unit may multiply the baseband signal with each beamforming coefficient to generate the RF signals included in one beamforming signal.

The transceiver includes a plurality of RF modulation units, where each RF modulation unit is configured to modulate the RF signals from a respective beamformer unit to a different frequency band. The transceiver includes a summation unit that is configured to sum the modulation RF signals from each RF modulation unit, where the summed modulated RF signals are transmitted over the antenna elements to produce the beamforming signals for each of the at least two beam architectures.

In one embodiment, the first beam architecture is associated with a first wireless standard and the second beam architecture is associated with a second wireless standard, where the first wireless standard is different than the second wireless standard. In other embodiment, the first and second beam architectures are associated with a same wireless standard, and the first beam architecture is associated with a carrier different than the second beam architecture.

In one embodiment, a number of first beamforming signals corresponds to a number of sectors in the first beam architecture, and a number of second beamforming signals corresponds to a number of sectors in the second beam architecture. Also, at least two first beamforming signals use at least two of the same antenna elements in the first sub-set, and at least two second beamforming signals use at least two of the same antenna elements in the second sub-set.

The transceiver may further include a first baseband unit associated with the first beam architecture and configured to generate first baseband signals, where each first baseband signal is associated with a different sector in the first beam architecture, and a second baseband unit associated with the second beam architecture and configured to generate second baseband signals, where each second baseband signal is associated with a different sector in the second beam architecture. The first beamformer unit is configured to generate a first beamforming signal based on first beamforming coefficients and a first baseband signal, and each first beamforming coefficient corresponds to a different antenna element in the first sub-set. Also, the second beamformer unit is configured to generate a second beamforming signal based on second beamforming coefficients and a second baseband signal, and each second beamforming coefficient corresponds to a different antenna element in the second sub-set. In one embodiment, a number of antenna elements in the second sub-set is greater than a number of antenna elements in the first sub-set.

The transceiver includes a first RF modulation unit associated with the first beam architecture, and configured to modulate the first RF signals to a first frequency band, and a second RF modulation unit associated with the second beam architecture, and configured to modulate the second RF signals to a second frequency band. The first frequency band may be different than the second frequency band.

The transceiver includes a summation unit configured to sum the first modulated RF signals with the second modulated RF signals, where the summed modulated RF signals are transmitted over the same antenna elements to produce the first and second beamforming signals for each of the first and second beam architectures.

### BRIEF DESCRIPTION OF THE DRAWINGS

Example embodiments will become more fully understood from the detailed description given herein below and the accompanying drawings, wherein like elements are represented by like reference numerals, which are given by way of illustration only and thus are not limiting of the present invention, and wherein:
FIG. 1 illustrates a system for implementing an antenna array for supporting multiple beam architectures in a transceiver according to an embodiment of the present invention;
FIG. 2 illustrates a transceiver having an antenna array for transmitting data on a downlink communication channel according to an embodiment of the present invention;
FIG. 3A illustrates a logical block of a beamformer unit in a transceiver according to an embodiment of the present invention;
FIG. 3B illustrates a physical overview of the antenna elements showing beamforming signals in a transceiver according to an embodiment of the present invention;
FIG. 4 illustrates an antenna element mapping chart in a transceiver according to an embodiment of the present invention; and
FIG. 5 illustrates a transceiver having an antenna array for receiving data on an uplink communication channel according to an embodiment of the present invention.

### DETAILED DESCRIPTION OF EXAMPLE EMBODIMENTS

Various example embodiments of the present invention will now be described more fully with reference to the accompanying drawings in which some example embodiments of the invention are shown. Like numbers refer to like elements throughout the description of the figures.

It will be understood that, although the terms first, second, etc. may be used herein to describe various elements, these elements should not be limited by these terms. These terms are only used to distinguish one element from another. For example, a first element could be termed a second element, and, similarly, a second element could be termed a first element, without departing from the scope of example embodiments. As used herein, the term "and/or" includes any and all combinations of one or more of the associated listed items.

The terminology used herein is for the purpose of describing particular embodiments only and is not intended to be limiting of example embodiments. As used herein, the singular forms "a," "an" and "the" are intended to include the plural forms as well, unless the context clearly indicates otherwise. It will be further understood that the terms "comprises," "comprising," "includes" and/or "including," when used herein, specify the presence of stated features, integers, steps, operations, elements and/or components, but do not preclude the presence or addition of one or more other features, integers, steps, operations, elements, components and/or groups thereof.

It should also be noted that in some alternative implementations, the functions/acts noted may occur out of the order noted in the figures. For example, two figures shown in succession may in fact be executed concurrently or may sometimes be executed in the reverse order, depending upon the functionality/acts involved.

Unless otherwise defined, all terms (including technical and scientific terms) used herein have the same meaning as commonly understood by one of ordinary skill in the art to which example embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

In the following description, illustrative embodiments will be described with reference to acts and symbolic representations of operations (e.g., in the form of flowcharts) that may be implemented as program modules or functional processes include routines, programs, objects, components, data structures, etc., that perform particular tasks or implement particular abstract data types and may be implemented using existing hardware at existing network elements. Such existing hardware may include one or more Central Processing Units (CPUs), digital signal processors (DSPs), application-specific-integrated-circuits, field programmable gate arrays (FPGAs), computers or the like.

It should be borne in mind, however, that all of these and similar terms are to be associated with the appropriate physical quantities and are merely convenient labels applied to these quantities. Unless specifically stated otherwise, or as is apparent from the discussion, terms such as "generating" or "summing" or the like, refer to the action and processes of a computer system, or similar electronic computing device, that manipulates and transforms data represented as physical, electronic quantities within the computer system's registers and memories into other data similarly represented as physical quantities within the computer system memories or registers or other such information storage, transmission or display devices.

The term "base station" may be considered synonymous to and/or referred to as a base transceiver station (BTS), NodeB, extended NodeB, evolved NodeB, femto cell, pico cell, access point, etc. and may describe equipment that provides the radio baseband functions for data and/or voice connectivity between a network and one or more user equipments. The term "user equipment" may be considered synonymous to, and may hereafter be occasionally referred to, as a mobile, mobile unit, mobile station, mobile user, subscriber, user, remote station, access terminal, receiver, etc., and may describe a remote user of wireless resources in a wireless communication network.

Embodiments of the present invention provide an antenna array in a transceiver that supports multiple beam architectures. A beam architecture relates to a number of sectors in a cell site and a number of beamforming signals per sector. Different beam architectures have a different configuration of sectors and beamforming signals. For example, one type of beam architecture may have 12 sectors per cell site and one beamforming signal per sector, and another type of beam architecture may have one sector per cell site and multiple beamforming signals in the sector. As a result, the antenna array of the present invention may support multiple wireless technologies (e.g., standards) such as Global System for Mobile Communications (GSM), Code Division Multiple Access (CDMA)/High Speed Packet Access (HSPA), Long Term Evolution (LTE), and/or CDMA/LTE, among others, for example. In addition, the antenna array may support multiple carriers in one type of wireless standard, where each carrier implements a different beam architecture. In other words, the same antenna array (e.g., the same antenna hardware) is used with different beam architectures, where each beam architecture may be associated with a different wireless standard or carrier.

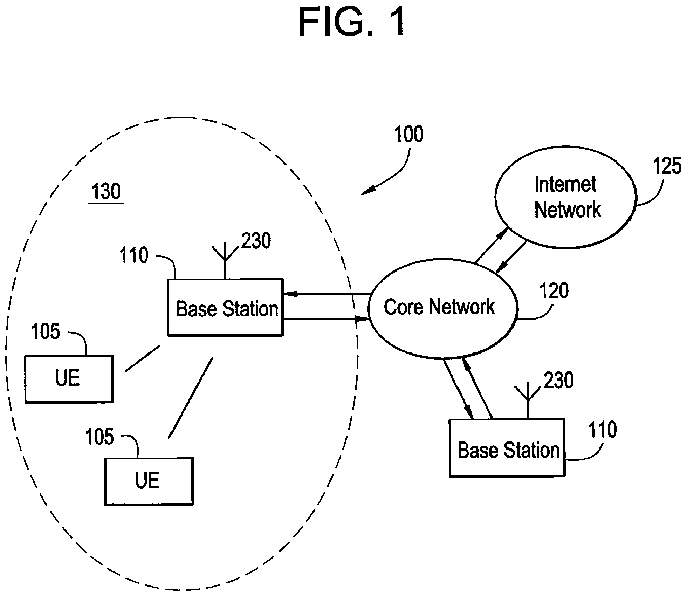

FIG. 1 illustrates a system for implementing an antenna array for supporting multiple beam architectures in a transceiver used in a wireless communication system according to an embodiment of the present invention.

The wireless communication system 100 illustrated in FIG. 1 may support a plurality of technologies such as GSM, HSPA, LTE and/or multiple carriers, for example. As shown in FIG. 1, the wireless communication system 100 includes user equipments (UEs) 105, base stations 110, a core network 120, and an internet network 125. In addition, the wireless communication system 100 may include other networking elements used for the transmission of data over the wireless communication system 100 that are well known in the art. The base station 110 may be a multi-standard base station (MBS), which includes modules that support each of the above wireless technologies.

Each UE 105 communicates with the base station 110 (and vice versa) over an air interface. Techniques for establishing, maintaining, and operating the air interfaces between the UEs 105 and the base station 110 to provide uplink and/or downlink wireless communication channels between the base station 110 and the UEs 105 are known in the art and in the interest of clarity only those aspects of establishing, maintaining, and operating the air interfaces that are relevant to the present disclosure will be discussed herein.

A cell site 130 may serve a coverage area of the base station 110 called a cell, and the cell may be divided into a number of sectors. For ease of explanation, the terminology cell may refer to either the entire coverage area served by the cell site 130 or a single sector of the cell site 130. Communication from the cell site 130 of the base station 110 to the UE 105 is referred to as the forward link or downlink. Communication from the UE 105 to the cell site 130 of the base station 110 is referred to as the reverse link or uplink.

The base station 110 includes a transceiver for transmitting and/or receiving information over the air interfaces. The transceiver includes an antenna array 230. The antenna array 230 includes multiple antennas or antenna elements. The base station 110 may employ multiple-input-multiple-output (MIMO) techniques so that the multiple antenna elements in the antenna array 230 can transmit multiple independent and distinct signals to the UEs 105 on the same frequency band using spatially multiplexed channels of the air interfaces and/or different frequency bands using an RF modulation scheme in order to support multiple carriers or standards.

According to embodiments of the present invention, the antenna array 230 is configured to support multiple beam architectures, where each beam architecture may relate to a different wireless standard or carrier. The antenna array 230 uses the same antenna hardware, which is reused by the multiple beam architectures employed by the wireless communication system 100.

A beam architecture relates to a number of sectors in the cell site 130 and a number of beamforming signals per sector. For example, S may be the number of sectors per cell site 130, and b(s) may be the number of beamforming signals for each sector s, where s=1,...,S. Therefore, one beam architecture may include any number of sectors per cell site 130 and any number of beamforming signals per sector. The beamforming signals may be adaptive signals that may vary in direction and beamwidth, or may be fixed beams.

In GSM, the wireless communication system 100 may have a beam architecture that supports 12 sectors per cite site 130, and one beamforming signal per sector. In HSPA, the wireless communication system 100 may have a beam architecture that supports 6 sectors per cite site 130 and two beamforming signals per sector. In LTE, the wireless communication system 100 may have a beam architecture that supports 3 sectors per cite site 130, and four beamforming signals per sector. As such, each of the above wireless standards supports a different beam architecture. However, embodiments of the present invention encompass any type beam architecture.

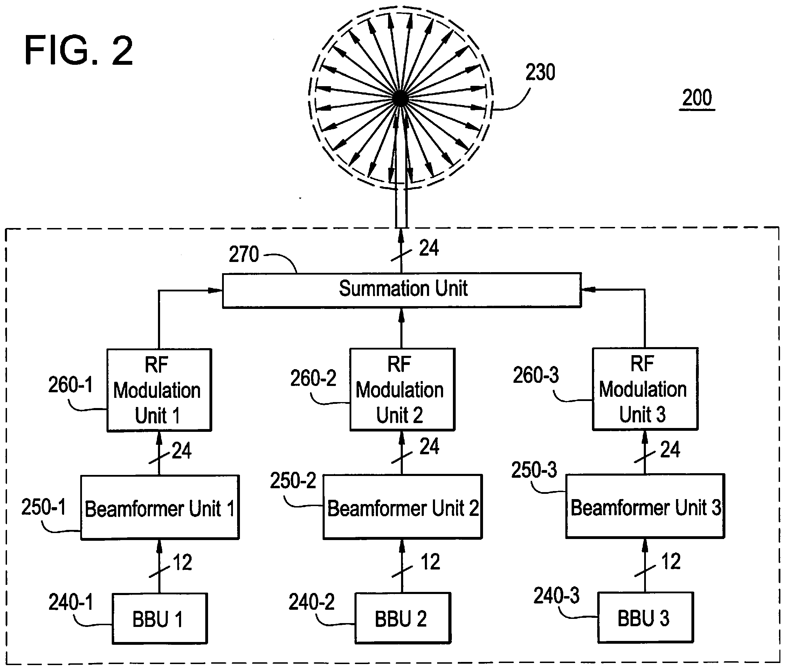

The base station 110 is configured to perform beamforming over a certain number of antenna elements of the antenna array 230 based on information received from the UE 105 being served by the base station 110. Beamforming is a signal processing technique used to control the directionality of the reception or transmission of a signal on the antenna array 230. The information received from the UE 105 may be used by a beamformer unit of the base station 110 to control the characteristics of a signal best used for communicating with the UE 105. Embodiments of the present invention encompass any type of beamforming technique that is well known in the art. However, according to embodiments of the present invention, the antenna elements are reused when transmitting beamforming signals over the antenna array 230 in order to support the multiple beam architectures. The details of the antenna array 230 is further explained with reference to FIGS. 2-5.

The base station 110 may transmit and receive information from a core network 120, which is the central part of the wireless communication network 100. For example, in UMTS, the core network 120 may include a mobile switching center (MSC), radio network controller (RNC), which may access the internet network 125 through a gateway support node (GSN) and/or access a public switched telephone network (PSTN) through a mobile switching center (MSC) to provide connectivity to the other base station 110. The RNC in UMTS networks provides functions equivalent to the Base Station Controller (BSC) functions in GSM networks.

FIG. 2 illustrates a transceiver 200 having an antenna array 230 for transmitting data on a downlink communication channel according to an embodiment of the present invention.

The transceiver 200 is configured to support multiple beam architectures, where each beam architecture is associated with a different configuration of sectors and beamforming signals. The transceiver 200 includes an antenna array 230 having a plurality of antenna elements. As shown in FIG. 2, the plurality of antenna elements may be arranged as a circular array. Also, the plurality of antenna elements may be placed on a hemisphere to form multiple beamforming signals. Furthermore, embodiments of the present invention encompass a conformal antenna array with closely-spaced antenna elements which are arranged in an arbitrary configuration to conform to given physical constraints of the deployment environment. In other words, the conformal antenna array may be specifically adapted to a particular environment such as a building. In the case of a building, the conformal antenna array may include two panels having antenna elements, where each panel is located on adjoining sides of the building. However, embodiments of the present invention encompass any other type of arrangement for the antenna elements such as a triangular structure, for example.

The antenna array 230 may be dimensioned such that the separation between adjacent antenna elements does not exceed half of the carrier wavelength. However, spacing between antenna element may encompass any value. The plurality of antenna elements are configured to support at least two different beam architectures using the same antenna elements. However, embodiments of the present invention encompass any number of beam architectures.

The transceiver 200 may include a plurality of baseband units (BBU) 240, a plurality of beamformer units 250, a plurality of RF modulation units 260, and a summation unit 270. The transceiver 200 also may include other components that are well known in the art such as a calibration unit, for example. A separate beamformer unit 250, BBU 240, and RF modulation unit 260 are provided for each beam architecture. For example, if the transceiver 200 supports two beam architectures, only two BBUs 240, two beamformer units 250, and two RF modulation units 260 are required.

However, in the particular embodiment shown in FIG. 2, the transceiver 200 supports three different beam architectures. For example, the first RF modulation unit 260-1, the first beamformer unit 250-1, and the first BBU 240-1 ("first branch") may be associated with the GSM standard, which implements 12 sectors per cite site 130, and one beamforming signal per sector. The second RF modulation unit 260-2, the second beamformer unit 250-2, and the second BBU 240-2 ("second branch") may be associated with the HSPA standard, which implements 6 sectors per cite site 130 and two beamforming signals per sector. The third RF modulation unit 260-3, the third beamformer unit 250-3, and the third BBU 240-3 ("third branch") may be associated with the LTE standard, which implements 3 sectors per cite site 130, and four beamforming signals per sector. Therefore, each of the three branches that are connected to the summation unit 130 relate to three different beam architectures. Also, each of the three branches operate according to a different frequency band. The data streams, which originate from a respective BBU 240, may be simultaneously transmitted over the plurality of antenna elements using beamforming, as further described below.

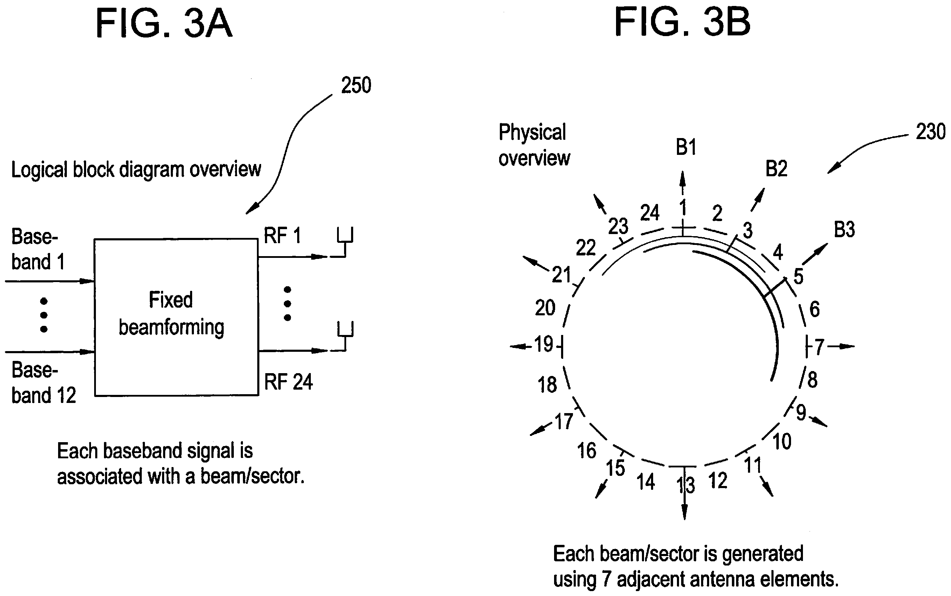

Referring to the GSM branch (first branch), the first BBU 240 generates baseband signals (e.g., 12 baseband signals) that include data streams to be transmitted to the UEs 105 in each of the 12 sectors of the cell site 130 on the downlink communication channel. The first beamformer unit 250-1 receives the baseband signals from the first BBU 240, and generates a number of beamforming signals, where each beamforming signal is associated with a different sector in the cell site 130. In the first branch, the number of beamforming signals corresponds to the number of sectors in the beam architecture. In the case of GSM, the number of sectors is 12. This feature is further explained with reference to FIGS. 3A and 3B.

FIG. 3A illustrates a logical block of a beamformer unit 250 used in a transceiver according to an embodiment of the present invention and FIG. 3B illustrates a physical overview of the antenna elements showing the beamforming signals according to an embodiment of the present invention.

Referring to FIGS. 3A and 3B, the beamformer unit 250 receives a baseband signal for each of the sectors, and generates a plurality of beamforming signals over the plurality of antenna elements. Each baseband signal is associated with a beamforming signal (and sector).

However, each beamforming signal is generated using a sub-set of antenna elements. In this case, each beamforming signal is generated using 7 adjacent antenna elements, as shown in FIG. 3B. For example, beamforming signal 1 (B1) is generated using antenna elements 22, 23, 24, 1, 2, 3 and 4, beamforming signal 2 (B2) is generated using antenna elements 24, 1, 2, 3, 4, 5 and 6, and beamforming signal 3 (B3) is generated using antenna elements 2-8. The same is repeated for each of the remaining beamforming signals. Described another way, each beamforming signal includes a plurality of radio-frequency (RF) signals that are generated across the sub-set of antenna elements. In the example in FIG. 3A, the beamformer unit 250 generates 24 RF signals based on the 12 baseband signals. The 24 RF signals are used to form each of the 12 beamforming signals. For example, B1 includes the RF signals across antenna elements 22, 23, 24, 1, 2, 3 and 4, B2 includes the RF signals across antenna elements 24 and 1-6, and B3 includes the RF signals across antenna elements 2-8.

As shown in FIG. 3B, the same antenna elements are reused for generating the beamforming signals. For example, at least two beamforming signals from the beamformer unit 250 use at least two (or more) of the same antenna elements in the subset. Stated another way, the antenna elements in an adjacent beamforming signal are shifted from the previous beamforming signal. Therefore, the RF signals over each antenna element are usually a summation of the RF signal for one particular beamforming signal and the RF signal for another particular beamforming signal (or more). For example, in FIG. 3B, the RF signal of B1 over antenna element 24 and the RF signal of B1 over antenna element 24 are added.

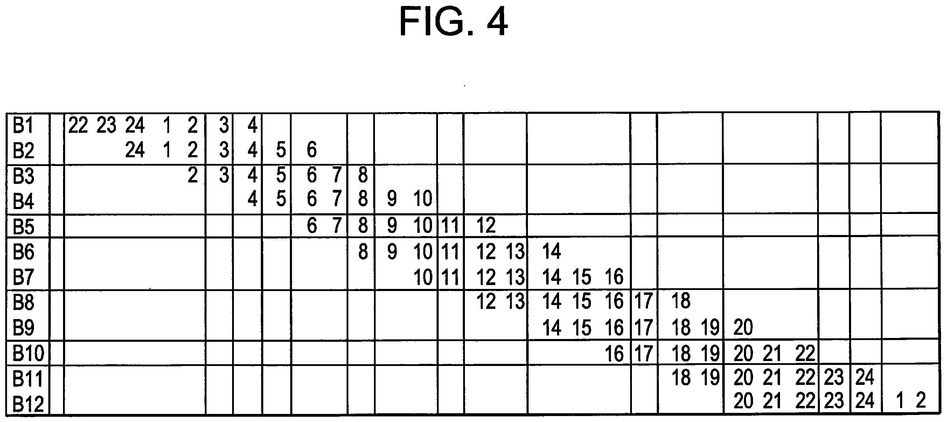

FIG. 4 illustrates an antenna element mapping chart in a transceiver according to an embodiment of the present invention. The chart shows which antenna elements correspond to each beamforming signal for the first beamformer unit 250-1, which is a continuation of the above discussion. However, embodiments of the present invention encompass any type of antenna mapping. For example, if a different antenna structure such as an triangular antenna structure is used, the mapping between the antenna elements and the beamforming signals will change. In addition, if the number of antenna elements is different than 24, the mapping between the antenna element and the beamforming signal will change. Furthermore, the mapping is dependent upon the number of sectors in the cell site 130 and the number of beamforming signals per sector.

The first beamformer unit 250-1 generates each of the beamforming signals based on respective beamforming coefficients and a respective baseband signal. For example, the beamforming coefficients of B1 may be A₂₂, A₂₃, A₂₄, A₁, A₂, A₃ and A₄. These beamforming coefficients correspond to antenna elements 22, 23, 24, 1, 2, 3, and 4. The first beamformer unit 250-1 multiples baseband signal X₁ by each of the beamforming coefficients A₂₂, A₂₃, A₂₄, A₁, A₂, A₃ and A₄ to produce the RF signals for antenna elements 22, 23, 24, 1, 2, 3, 4 for the beamforming signal B2. Similarly, the beamforming coefficients of B2 may be B₂₄, B₁, B₂, B₃, B₄, B₅, B₆. The first beamformer unit 250-1 multiples baseband signal X₂ by each of the beamforming coefficients B₂₄, B₁, B₂, B₃, B₄, B₅, B₆ to produce the RF signals for antenna elements 24 and 1-6 for the beamforming signal B1. The beamforming coefficients may be fixed or determined adaptively.

Referring back to FIG. 2, the first RF modulation unit 260-1 modulates the RF signals from the first beamformer unit 250-1 to a particular frequency band, which is different from the frequency band of the second branch and the third branch. In other words, each branch operates according to a different frequency band.

In the second branch (e.g., the HSPA standard), the second BBU 240-2, the second beamformer unit 250-2 and the second RF modulation unit 260-2 operate in a similar manner. However, as indicated above, the beam architecture of the HSPA standard implements 6 sectors per cite site 130 and two beamforming signals per sector. Therefore, the second baseband unit 240-2 generates 12 baseband signals, where 2 baseband signals are included in each of the 6 sectors. The second beamformer unit 250-2 generates 6 beamforming signals, where each beamforming signal is generated over a subset of antenna elements. However, in this implementation, the subset of antenna elements in the second beam architecture (e.g., HSPA) is greater than the subset of antenna elements in the first beam architecture (e.g., GSM). For example, instead of generating a beamforming signal over 7 antenna elements, the beamforming signal is generated over 9 antenna elements, for example. None-the-less, the operation of generating the beamforming signals/RF signals are the same as previously described.

In the third branch (e.g., the LTE standard), the third BBU 240-3, the third beamformer unit 250-3 and the third RF modulation unit 260-3 operate in a similar manner. However, as indicated above, the beam architecture of the LTE standard implements 3 sectors per cite site 130, and four beamforming signals per sector. Therefore, the third baseband unit 240-3 generates 4 baseband signals for each sector. The third beamformer unit 250-3 generates 3 beamforming signals, where each beamforming signal is generated over a subset of antenna elements. However, in this implementation, the subset of antenna elements in the third beam architecture (e.g., LTE) is greater than the subset of antenna elements in the first beam architecture (e.g., GSM) and the second beam architecture (e.g., HSPA). None-the-less, the operation of generating the beamforming signals/RF signals are the same as previously described.

The summation unit 270 is configured to sum the modulation RF signals from each of the RF modulation units 260 across the standards, for example. As a result, the summed modulated RF signals are transmitted over the antenna elements to produce the beamforming signals for each of the multiple beam architectures.

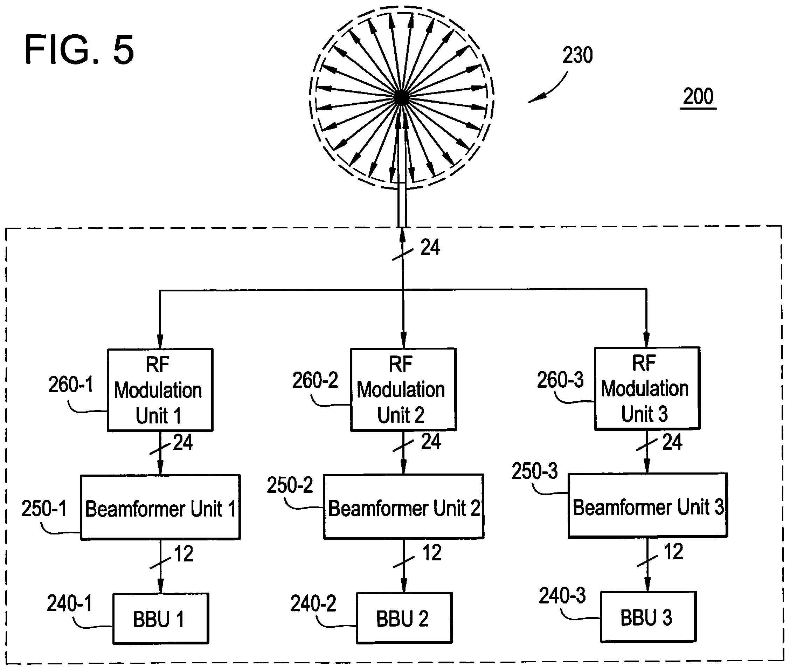

FIG. 5 illustrates a transceiver 200 having an antenna array 230 for receiving data on an uplink communication channel according to an embodiment of the present invention.

The transceiver 200 in FIG. 5 operates in a similar manner as previously described with reference to FIGS. 2-5. However, each of the RF modulation units 260 receives the RF signals from the antenna elements of the antenna array 230 and operates as a down converter to baseband at a frequency band specific to the standard or carrier. For example, the first RF modulation unit 260-1 converts the RF signals received from antenna elements to the baseband signal at the frequency band of the first beam architecture (e.g., GSM standard). The beamformer units 250 and the BBUs 240 operate in a similar manner described above in order to recover the baseband signals for each of the beam architectures.

As a result, the antenna array according to an embodiment of the present invention has the ability to add or remove wireless standards on existing antenna architectures without the manual reconfiguration of the antenna hardware.

## Claims

1. A transceiver (200) for supporting multiple beam architectures in a wireless communication system, the transceiver comprising:
an antenna array (230) including a plurality of antenna elements, the plurality of antenna elements being configured to support at least two beam architectures in a cell site (130), each beam architecture associated with a different configuration of sectors and beamforming signals,
wherein a first beam architecture has a first number of sectors per cell site and a first number of beamforming signals per sector, and a second beam architecture has a second number of sectors per cell site and a second number of beamforming signals per sector, the second number of sectors being different from the first number of sectors and the second number of beamforming signals per sector being different from the first number of beamforming signals per sector,
a plurality of baseband units (240), each baseband unit (240) being associated with a different beam architecture and configured to generate baseband signals, each baseband signal corresponding to a different sector of the associated beam architecture,
a plurality of beamformer units (250), each beamformer unit (250) being associated with a different beam architecture, each beamformer unit (250) configured to generate a number of beamforming signals, each beamforming signal including a plurality of radio-frequency (RF) signals corresponding to a sub-set of antenna elements of the plurality of antenna elements,
wherein each beamformer unit (250) is configured to generate a beamforming signal for a particular sector based on beamforming coefficients and a baseband signal received from a respective baseband unit (240), and each beamforming coefficient corresponding to a different antenna element in the sub-set,
wherein at least two beamforming signals generated from one beamformer unit (250) use at least two of the same antenna elements in the sub-set,
a plurality of RF modulation units (260), each RF modulation unit (260) configured to modulate the RF signals from a respective beamformer unit (250) to a different frequency band,
a summation unit (270) configured to sum the modulated RF signals from the plurality of RF modulation units (260) for transmission over the plurality of antenna elements.

2. The transceiver of claim 1, wherein each beam architecture is associated with a different wireless standard.

3. The transceiver of claim 1, wherein each beam architecture is associated with a different carrier within one wireless standard.

4. The transceiver of claim 1, wherein the antenna elements are arranged as a circular array.

5. The transceiver of claim 1, wherein each beamforming signal from each beamformer unit (250) is associated with a different sector in the cell site, and a number of beamforming signals corresponds to a number of sectors for a respective beam architecture.

6. The transceiver of claim 1, wherein each beamformer unit (250) multiples the baseband signal with each beamforming coefficient to generate the RF signals included in one beamforming signal.

7. The transceiver of claim 1, wherein the first number of sectors times the first number of beamforming signals per sector equals the second number of sectors times the second number of beamforming signals per sector.

## Patentansprüche

1. Sendeempfänger (200) zum Unterstützen von mehreren Strahlarchitekturen in einem drahtlosen Kommunikationssystem, wobei der Sendeempfänger Folgendes umfasst:
ein Antennenarray (230), das eine Vielzahl von Antennenelementen beinhaltet, wobei die Vielzahl von Antennenelementen dazu ausgelegt sind, mindestens zwei Strahlarchitekturen an einem Zellenstandort (130) zu unterstützen, wobei jede Stahlarchitektur mit einer anderen Auslegung von Sektoren und Strahlformungssignalen verknüpft ist,
wobei eine erste Strahlarchitektur eine erste Anzahl von Sektoren pro Zellenstandort und eine erste Anzahl von Strahlformungssignalen pro Sektor aufweist und eine zweite Strahlarchitektur eine zweite Anzahl von Sektoren pro Zellenstandort und eine zweite Anzahl von Strahlformungssignalen pro Sektor aufweist, wobei sich die zweite Anzahl von Sektoren von der ersten Anzahl von Sektoren unterscheidet und wobei sich die zweite Anzahl von Strahlformungssignalen pro Sektor von der ersten Anzahl von Strahlformungssignalen pro Sektor unterscheidet,
eine Vielzahl von Basisbandeinheiten (240), wobei jede Basisbandeinheit (240) mit einer anderen Strahlarchitektur verknüpft und dazu ausgelegt ist, Basisbandsignale zu erzeugen, wobei jedes Basisbandsignal einem anderen Sektor der verknüpften Strahlarchitektur entspricht,
eine Vielzahl von Strahlformereinheiten (250), wobei jede Strahlformereinheit (250) mit einer anderen Strahlarchitektur verknüpft ist, wobei jede Strahlformereinheit (250) dazu ausgelegt ist, eine Anzahl von Strahlformungssignalen zu erzeugen, wobei jedes Strahlformungssignal eine Vielzahl von Funkfrequenz(RF)-Signalen beinhaltet, die einem Untersatz von Antennenelementen der Vielzahl von Antennenelementen entsprechen,
wobei jede Strahlformereinheit (250) dazu ausgelegt ist, auf Basis von Strahlformungskoeffizienten und einem Basisbandsignal, das von einer jeweiligen Basisbandeinheit (240) empfangen wird, ein Strahlformungssignal für einen speziellen Sektor zu erzeugen, und wobei jeder Strahlformungskoeffizient einem anderen Antennenelement im Untersatz entspricht,
wobei mindestens zwei Strahlformungssignale, die von einer Strahlformereinheit (250) erzeugt werden, mindestens zwei derselben Antennenelemente im Untersatz verwenden,
eine Vielzahl von RF-Modulationseinheiten (260), wobei jede RF-Modulationseinheit (260) dazu ausgelegt ist, die RF-Signale von einer jeweiligen Strahlformereinheit (250) auf ein anderes Frequenzband zu modulieren,
eine Summierungseinheit (270), die dazu ausgelegt ist, die modulierten RF-Signale von der Vielzahl von RF-Modulationseinheiten (260) zur Übertragung über die Vielzahl von Antennenelementen zu summieren.

2. Sendeempfänger nach Anspruch 1, wobei jede Strahlarchitektur mit einem anderen drahtlosen Standard verknüpft ist.

3. Sendeempfänger nach Anspruch 1, wobei jede Strahlarchitektur mit einem anderen Träger in einem drahtlosen Standard verknüpft ist.

4. Sendeempfänger nach Anspruch 1, wobei die Antennenelemente als ein kreisförmiges Array angeordnet sind.

5. Sendeempfänger nach Anspruch 1, wobei jedes Strahlformungssignal von jeder Strahlformereinheit (250) mit einem anderen Sektor am Zellenstandort verknüpft ist und eine Anzahl von Strahlformungssignalen einer Anzahl von Sektoren für eine jeweilige Strahlarchitektur entspricht.

6. Sendeempfänger nach Anspruch 1, wobei jede Strahlformereinheit (250) das Basisbandsignal mit jedem Strahlformungskoeffizienten multipliziert, um die RF-Signale, die in einem Strahlformungssignal beinhaltet sind, zu erzeugen.

7. Sendeempfänger nach Anspruch 1, wobei die erste Anzahl von Sektoren mal der ersten Anzahl von Strahlformungssignalen pro Sektor mit der zweiten Anzahl von Sektoren mal der zweiten Anzahl von Strahlformungssignalen pro Sektor übereinstimmt.

## Revendications

1. Émetteur-récepteur (200) pour prendre en charge des architectures de faisceau multiples dans un système de communication sans fil, l'émetteur-récepteur comprenant :
un réseau d'antennes (230) comportant une pluralité d'éléments d'antenne, la pluralité de éléments d'antenne étant configurée pour prendre en charge au moins deux architectures de faisceau dans un site cellulaire (130), chaque architecture de faisceau étant associée à une configuration différente de secteurs et de signaux de formation de faisceau,
dans lequel une première architecture de faisceau a un premier nombre de secteurs par site cellulaire et un premier nombre de signaux de formation de faisceau par secteur, et une deuxième architecture de faisceau a un deuxième nombre de secteurs par site cellulaire et un deuxième nombre de signaux de formation de faisceau par secteur, le deuxième nombre de secteurs étant différent du premier nombre de secteurs et le deuxième nombre de signaux de formation de faisceau par secteur étant différent du premier nombre de signaux de formation de faisceau par secteur,
une pluralité d'unités de bande de base (240), chaque unité de bande de base (240) étant associée à une architecture de faisceau différente et configurée pour générer des signaux de bande de base, chaque signal de bande de base correspondant à un secteur différent de l'architecture de faisceau associée,
une pluralité d'unités de formation de faisceau (250), chaque unité de formation de faisceau (250) étant associée à une architecture de faisceau différente, chaque unité de formation de faisceau (250) étant configurée pour générer un nombre de signaux de formation de faisceau, chaque signal de formation de faisceau comportant une pluralité de signaux radiofréquence (RF) correspondant à un sous-ensemble d'éléments d'antenne de la pluralité de éléments d'antenne,
dans lequel chaque unité de formation de faisceau (250) est configurée pour générer un signal de formation de faisceau pour un secteur particulier sur la base de coefficients de formation de faisceau et d'un signal de bande de base reçu à partir d'une unité de bande de base (240) respective, et chaque coefficient de formation de faisceau correspond à un élément d'antenne différent dans le sous-ensemble,
dans lequel au moins deux signaux de formation de faisceau générés à partir d'une unité de formation de faisceau (250) utilisent au moins deux des mêmes éléments d'antenne dans le sous-ensemble,
une pluralité d'unités de modulation RF (260), chaque unité de modulation RF (260) étant configurée pour moduler les signaux RF à partir d'une unité de formation de faisceau (250) respective à une bande de fréquence différente,
une unité de somme (270) configurée pour faire la somme des signaux RF modulés provenant de la pluralité d'unités de modulation RF (260) pour une transmission sur la pluralité de éléments d'antenne.

2. Émetteur-récepteur selon la revendication 1, dans lequel chaque architecture de faisceau est associée à une norme sans fil différente.

3. Émetteur-récepteur selon la revendication 1, dans lequel chaque architecture de faisceau est associée à une porteuse différente dans une norme sans fil.

4. Émetteur-récepteur selon la revendication 1, dans lequel les éléments d'antenne sont agencés sous forme d'un réseau circulaire.

5. Émetteur-récepteur selon la revendication 1, dans lequel chaque signal de formation de faisceau provenant de chaque unité de formation de faisceau (250) est associé à un secteur différent dans le site cellulaire, et un nombre de signaux de formation de faisceau correspond à un nombre de secteurs pour une architecture de faisceau respective.

6. Émetteur-récepteur selon la revendication 1, dans lequel chaque unité de formation de faisceau (250) multiplie le signal de bande de base avec chaque coefficient de formation de faisceau pour générer les signaux RF inclus dans un signal de formation de faisceau.

7. Émetteur-récepteur selon la revendication 1, dans lequel le premier nombre de secteurs fois le premier nombre de signaux de formation de faisceau par secteur est égal au deuxième nombre de secteurs fois le deuxième nombre de signaux de formation de faisceau par secteur.
